# EUROPÄISCHE PATENTSCHRIFT

(11) **EP 3 008 804 B1**
(45) Veröffentlichungstag und Bekanntmachung des Hinweises auf die Patenterteilung: **06.04.2022**
(21) Anmeldenummer: 14723722.6
(22) Anmeldetag: 13.05.2014
(51) Int. Cl.: H02M 5/458, H02J 7/34

(54) **ELEKTRISCHES ANTRIEBSSYSTEM SOWIE ENERGIESPEICHERVORRICHTUNG HIERFÜR**
ELECTRICAL DRIVE SYSTEM AND ENERGY STORAGE APPARATUS THEREFOR
SYSTÈME D'ENTRAÎNEMENT ÉLECTRIQUE AINSI QUE DISPOSITIF ACCUMULATEUR D'ÉNERGIE ASSOCIÉ

(30) Priorität: 11.06.2013 DE 102013009823
(43) Veröffentlichungstag der Anmeldung: 20.04.2016
(73) Patentinhaber: Liebherr-Components Biberach GmbH, 88400 Biberach an der Riß (DE)
(72) Erfinder: SCHUSTER, Wolfgang, 88339 Bad Waldsee (DE); FENKER, Oliver, 88447 Warthausen (DE); WELSER, Sven, 88437 Äpfingen (DE)
(74) Vertreter: Thoma, Michael
(86) Internationale Anmeldenummer: PCT/EP2014/001291
(87) Internationale Veröffentlichungsnummer: WO 2014/198371

(56) Entgegenhaltungen:
- WO-A1-2007/145628
- DE-A1-102008 062 655
- DE-A1-102010 045 904
- DE-U1-202004 006 492
- FR-A1- 2 969 861
- JP-A- 2012 084 486
- US-A- 5 373 195
- US-A1- 2001 017 240
- US-A1- 2005 275 372
- US-A1- 2007 137 945
- US-A1- 2007 137 945
- US-A1- 2010 164 435
- US-A1- 2011 133 556
- US-A1- 2012 105 001

## Beschreibung

Die vorliegende Erfindung betrifft allgemein Antriebssysteme mit zumindest einem Elektromotor, der über eine Leistungselektronik speisbar ist, die über einen Gleichspannungskreis mit einer Spannungsquelle verbindbar ist, sowie einer Energiespeichervorrichtung zum Zwischenspeichern von aus dem Elektromotor rückgespeister Energie. Die Erfindung betrifft dabei insbesondere eine solche Energiespeichervorrichtung zum Anschließen an einen Gleichspannungskreis einer Leistungselektronik, mit zumindest einem elektrischen Speicherblock, einem DC/DC-Steller für das Verbinden des genannten Gleichspannungskreises mit dem internen Spannungskreis des Speicherblocks, sowie einer Steuerungseinheit zum Steuern des DC/DC-Stellers. Solche elektrischen Antriebssysteme können bei Hubvorrichtungen, insbesondere Kranen wie Containerbrückenkranen, oder Baumaschinen wie beispielsweise Betonmischerfahrzeugen, grundsätzlich aber auch anderen mobilen Maschinen oder auch netzgebundenen Maschinen zum Einsatz kommen.

Die US 2007/0137945 A1 zeigt eine derartige Energiespeichervorrichtung für den elektrischen Antrieb eines Aufzugs, wobei als elektrischer Speicherblock ein Doppelschichtkondensator vorgesehen ist, dessen Lade-/Entladekreis von einer Ladesteuereinheit gesteuert wird. Weitere Energiespeichervorrichtungen sind aus den Schriften US 2011/133556 A1, US 5,373,195 A, FR 2 969 861, WO 2007/145628 A1,US 2001/017240 A1 und DE 10 2008 062 655 A1 bekannt.

Zur Einsparung von Energie werden immer mehr Antriebe elektrifiziert, die bislang mechanisch oder hydraulisch betrieben wurden, um den besseren Wirkungsgrad von Elektromotoren ausnutzen zu können. Eine solche Elektrifizierung ist auch bei Baumaschinen wie Betonmischerfahrzeugen, Erdbewegungs- und Bergbaumaschinen wie Oberflächenfräsern, oder Kranen wie Containerbrückenkranen im Gange, obwohl hier aufgrund von rauen Arbeitsbedingungen wie Staubbelastung, kräftigen Vibrationen und dergleichen Elektroantriebe und deren Komponenten weniger einfach als bei in Gebäuden eingesetzten Arbeitsmaschinen verwendbar sind.

Um bei solchen elektrischen Antriebssystemen nicht nur den besseren Wirkungsgrad von Elektromotoren selbst nutzen zu können, sondern auch darüber hinaus Energie sparen zu können, wird elektrische Energie zwischengespeichert, wenn sie im Arbeitszyklus, beispielsweise beim Senken von Lasten oder beim Bremsen, anfällt, und wieder freigegeben, wenn Energie benötigt wird, beispielsweise beim Heben von Lasten, beim Beschleunigen etc. Sinnvollerweise wird die Speicherung der Energie hier elektrisch bewerkstelligt, wozu sich Kondensatoren, insbesondere Doppelschichtkondensatoren, oder andere Batteriesysteme oder Akkumulatoren eignen.

Werden solche Doppelschichtkondensatoren als Energiespeicher verwendet, werden sog. DC/DC-Steller oder DC/DC-Wandler benötigt, da sich die Spannung über einem Doppelschichtkondensator abhängig vom Füllzustand ändert. Der genannte DC/DC-Wandler verbindet den Doppelschichtkondensator-Speicherbaustein mit den Antriebselementen bzw. den damit normalerweise verbundenen Frequenzumrichter und stellt den Austausch von Energie sicher. Solche DC/DC-Wandler oder DC/DC-Steller bezeichnen eine elektrische Schaltung, die eine am Eingang zugeführte Gleichspannung in eine Gleichspannung mit höherem, niedrigerem oder invertiertem Spannungsniveau umsetzen kann und in der Lage ist, Energie vom hohen Spannungspegel in den niedrigen Spannungspegel zu transferieren, beispielsweise um den Energiespeicherblock zu laden, und ebenfalls in der anderen Richtung zu transferieren, d.h. auszuspeichern bzw. vom Speicherblock in den Gleichspannungskreis des Antriebssystems zu transferieren.

Die Anbindung einer solchen Energiespeichervorrichtung mit einem Doppelschichtkondensator an das jeweilige Antriebssystem ist jedoch mehr oder minder aufwändig, da üblicherweise die einzelnen Bausteine einer solchen Energiespeichervorrichtung mühsam zusammenkonfiguriert und an die Rahmenbedingungen des Antriebssystems, beispielsweise dessen Elektromotor und Leistungselektronik angepasst werden müssen. Hierbei wird ein Anwender bzw. Applikationsingenieur in der Regel gezwungen, sich mit den komplexen internen Abläufen im Energiespeicher und im DC/DC-Steller zu beschäftigen, um die notwendigen Auslegungen bezüglich der Bausteine und der internen Funktionsweise machen zu können. Hinzu kommt eine je nach Antrieb und Einsatzgerät mehr oder minder aufwändige Verkabelung einschließlich Hochstromleitungen, Busverkabelung und SPS-Signalen. Gleichzeitig muss bei den eingangs genannten Einsatzgeräten darauf geachtet werden, dass die Energiespeichervorrichtung den rauen Einsatzbedingungen wie Staubbelastung und Stoß- und Vibrationsbelastungen standhalten muss.

Der vorliegenden Erfindung liegt hiervon ausgehend die Aufgabe zugrunde, eine verbesserte Energiespeichervorrichtung der eingangs genannten Art, sowie ein verbessertes Antriebssystem mit einer solchen Energiespeichervorrichtung zu schaffen, die Nachteile des Standes der Technik vermeiden und Letzteren in vorteilhafter Weise weiterbilden. Insbesondere soll die Anbindung der Energiespeichervorrichtung an ein jeweiliges Antriebssystem drastisch vereinfacht werden und dabei dennoch die Zwischenspeicherung und Wiederabgabe der elektrischen Energie in und aus dem Energiespeicher effizient und sicher gestaltet werden.

Erfindungsgemäß wird die genannte Aufgabe durch eine Energiespeichervorrichtung gemäß Anspruch 1 und ein Antriebssystem mit einer solchen Energiespeichervorrichtung gemäß Anspruch 18 gelöst. Erfindungsgegenstand ist weiterhin der Einsatz eines solchen Antriebssystems in einer Hubvorrichtung gemäß Anspruch 21 sowie einer Baumaschine gemäß Anspruch 22.

Es wird also vorgeschlagen, die elektrischen Komponenten der Energiespeichervorrichtung zu einem Plug-and-Play-Modul zusammenzufassen, das von einem Anwender nach Art einer Black Box einfach an die Leistungselektronik bzw. den Gleichspannungskreis zur Versorgung des Antriebssystems anschließbar ist und sich an die Gegebenheiten der Systemumgebung selbst anpasst bzw. die notwendigen Steuerungsadaptionen durchführt. Erfindungsgemäß zeichnet sich die Energiespeichervorrichtung dadurch aus, dass der DC/DC-Steller bidirektional ausgebildet ist, die Steuerungseinheit Abgabe- und Einspeisesteuermittel zum Ansteuern des DC/DC-Stellers sowohl beim Abgeben von Strom aus dem Speicherblock an den Gleichspannungskreis als auch beim Einspeisen von Strom aus dem Gleichspannungskreis in den Speicherblock aufweist, und der genannte DC/DC-Steller, der Speicherblock und die Steuerungseinheit zu einer Energiespeichereinheit mit einem gemeinsamen Gehäuse zusammengefasst sind, in dem der DC/DC-Steller, der Speicherblock und die Steuerungseinheit aufgenommen sind und an dessen Außenseite zwei Anschlüsse zum Anschließen an den Gleichspannungskreis vorgesehen sind. Es erfolgt also sowohl die Einspeisung als auch die Abgabe von Strom in den bzw. aus dem Speicherblock über den DC/DC-Steller, der sowohl die Stromabgabe als auch die Einspeisung steuert, so dass eine einfache Anbindung an den Gleichspannungskreis des Antriebssystems möglich ist. Dabei bildet die Energiespeichervorrichtung ein integrales Gesamtsystem, welches die beteiligten und benötigten Komponenten in einem einzigen Gehäuse zusammenführt, in das auch die Steuerung für das Energiemanagement eingebaut ist. Im Wesentlichen müssen lediglich die beiden an der Gehäuseaußenseite vorhandenen Anschlüsse mit dem Gleichspannungskreis des Antriebssystems verbunden werden, wobei die Steuerungseinheit im Inneren des Gehäuses der Energiespeichervorrichtung die notwendigen Steuerungs- und Regelgrößen an das Antriebssystem anpasst.

Der Speicherblock der Energiespeichervorrichtung kann insbesondere zumindest einen Kondensator, vorzugsweise in Form eines Doppelschichtkondensators, zur Energiespeicherung umfassen, wobei prinzipiell aber auch zumindest eine Batterie oder ein Akkumulator zusätzlich oder alternativ zu einem solchen oder mehreren Kondensatoren vorgesehen sein kann.

Um thermische Probleme der Energiespeichervorrichtung zu vermeiden, sind der zumindest eine Speicherblock und/oder der DC/DC-Steller und/oder die Steuerungseinheit im Inneren des gemeinsamen Gehäuses an einen Kühlkreis angebunden, der am Gehäuse Kühlmittelanschlüsse zum Anschließen an einen externen Kühlkreis aufweist, um die in das Kühlmittel gelangende Wärme aus dem Speicherblock und/oder dem DC/DC-Steller und/oder der Steuerungseinheit aus dem Gehäuse herausführen und extern abgeben zu können. Um eine einfache Montage zu ermöglichen, sind die genannten Kühlmittelanschlüsse steckbar ausgebildet, so dass lediglich die Kühlmittelleitungen des externen Kühlkreises an das Gehäuse der Energiespeichervorrichtung angeschlossen werden müssen.

Dabei werden der interne und/oder externe Kühlkreis und dessen Bauteile wie Kühlmittelumwälzer, Kühlluftgebläse, Schaltventile, Durchflussregler und dergleichen temperaturabhängig von der Steuereinheit im Inneren der Energiespeichervorrichtung in Abhängigkeit der Temperatur einer Komponente im Inneren des Gehäuses der Energiespeichervorrichtung und/oder einer Umgebungstemperatur angesteuert. Hierzu kann zumindest ein Temperatursensor vorgesehen und mit der Steuereinheit verbindbar sein, welcher die genannte Bauteil- und/oder Umgebungstemperatur und/oder Gehäuseinnenraumtemperatur misst. Alternativ oder zusätzlich kann die Steuereinheit mit einem Durchflussmesser verbindbar sein, um die Durchflussmenge des Kühlmediums regeln zu können.

Um nicht nur die Kühlmittelleitungen einfach an das Gehäuse anstecken zu können, können auch die elektrischen Anschlüsse und/oder die Signalanschlüsse der Energiespeichervorrichtung an der Gehäuseaußenseite steckbar bzw. als Stecker ausgebildet sein, so dass die entsprechenden Strom- bzw. Signalleitungen lediglich angesteckt werden brauchen.

Um eine einfache Handhabung und einen einfachen Transport der Energiespeichervorrichtung zu ermöglichen, kann das Gehäuse, in das die Komponenten des Moduls integriert sind, teilbar ausgebildet sein und mehrere Gehäuseteile umfassen, die zu dem gemeinsamen Gehäuse zusammensetzbar sind, in das zumindest der DC/DC-Steller, der Speicherblock und die Steuereinheit integriert sind. In die verschiedenen Gehäuseteile können verschiedene elektrische Komponenten untergebracht sein, die beim Zusammensetzen der Gehäuseteile durch lösbare Verbindungsmittel, insbesondere Steckkontakte, miteinander verbunden werden können. Beispielsweise können Steckverbindungsteile an den Schnittstellen der Gehäuseteile oder anderswo so angebracht sein, dass beim Zusammensetzen bzw. Aneinanderfügen zweier Gehäuseteile automatisch auch die Steckverbindungen geschlossen werden bzw. in Eingriff geraten, um die elektronischen Komponenten, die in den beiden Gehäuseteilen untergebracht sind, miteinander zu verbinden.

Um einen sicheren, gefahrlosen Gebrauch der Energiespeichereinheit sicherzustellen, kann in Weiterbildung der Erfindung eine Warnsignaleinrichtung zum Abgeben eines Warnsignals vorgesehen sein, wenn die Energiespeichereinheit noch mit Energie geladen ist und insofern an den äußeren Anschlusskontakten noch Spannung anliegen kann und damit ein mögliches Gefahrenpotential vorhanden ist. Die Warnsignaleinrichtung kann beispielsweise visuell ausgebildet sein und ein von außen sichtbares Warnsignal bereitstellen, ggf. aber auch akustisch oder in anderer Weise arbeiten.

Alternativ oder zusätzlich zu einer solchen Warnsignaleinrichtung kann vorteilhafterweise auch ein elektrischer Trennschalter zum Abtrennen des Speicherblocks und/oder zum Energielosschalten der Anschlüsse am Gehäuse vorgesehen sein, wobei der genannte Trennschalter intern bzw. im Inneren des Gehäuses der Energiespeichereinheit als Trennschaltung ausgebildet sein kann. Mit Hilfe eines solchen elektrischen Trennschalters können die aus dem Energiespeichersystem herausführenden Anschlüsse elektrisch spannungslos gemacht werden, wodurch das Gefahrenpotential beträchtlich reduziert wird.

Alternativ oder zusätzlich kann die Energiespeichervorrichtung auch eine vorzugsweise integrierte Entladeschaltung umfassen, die vorteilhafterweise von außen her betätigbar bzw. auf ein Kommando von außen her die im Speicherblock noch enthaltene Energie in Wärme umwandeln kann. Dementsprechend kann durch ein von außen her an die Energiespeichereinheit gebbares Steuersignal der Speicherblock entladen werden, beispielsweise wenn die Energiespeichervorrichtung vom Antriebssystem abgekoppelt werden soll.

Vorteilhafterweise kann das Gehäuse in einer ausreichend hohen IP-Schutzklasse ausgebildet sein, die den Eisnatz des Speichersystems im Freien ermöglicht. Vorteilhafterweise ist die Energiespeichervorrichtung mechanisch derart ausgebildet, daß sie auch bei höheren Vibrationsbelastungen, wie sie bei mobilen Arbeitsmaschinen wie Bausmaschinen und Kranen vorkommen, einsetzbar ist, bspw. durch entsprechend starke Ausbildung des Gehäuses und/oder dämpfende Einbettung der elektrischen Komponenten im Gehäuse und/oder geeignete Ausbildung der elektrischen Komponenten selbst.

Die in die Energiespeichereinheit integrierte Steuervorrichtung kann grundsätzlich verschieden ausgebildet sein bzw. verschiedene Betriebsmodi realisieren. Grundsätzlich ist die Steuervorrichtung in vorteilhafter Weiterbildung der Erfindung an die speziellen Eigenschaften der Speicherelemente des zumindest einen Speicherblocks angepasst und enthält Steuermittel zur Ausführung des Energiemanagements entsprechend den speziellen Eigenschaften der genannten Speicherelemente.

Um einen effizienten Einsatz der zwischengespeicherten Energie und deren Rückspeisung in das Antriebssystem bzw. die Aufladung des Speicherblocks effizient steuern zu können, kann die in die Energiespeichereinheit integrierte Steuereinheit auch Informationen bzw. Betriebsparameter betreffend den Zustand der Energiespeichereinheit, insbesondere des Speicherblocks bestimmen und/oder zur externen Verwendung bereitstellen. Beispielsweise kann das Steuerungssystem Steuermittel zur Bestimmung einer Energiekennzahl und zum Bereitstellen und/oder Übermitteln dieser Energiekennzahl zu einer übergeordneten Steuerung umfassen, wobei die genannte Energiekennzahl die im Speicher verfügbare Energie darstellt.

Gemäß einer bervorzugten Ausgestaltung der Erfindung verarbeitet die integrierte Steuerungsvorrichtung auch von außen her kommende Informationen und/oder setzt Steuerbefehle so um, dass die Steuerungsvorrichtung Steuer- und/oder Regelungsmittel für den DC/DC-Steller umfasst, die auf ein Steuerungssignal von außen her vorgebbare Leistungswerte für die Ladung und/oder Entladung durch Sollwertvorgaben für die Regelung des DC/DC-Stellers umsetzt.

Alternativ oder zusätzlich kann das Steuerungssystem von außen her mit konfigurierbaren Parametern versorgt werden und auf Basis dieser von außen her eingespeisten, konfigurierbaren Parameter eine kennliniengesteuerte Betriebsweise ausführen.

In vorteilhafter Weiterbildung der Erfindung kann die integrierte Steuerungsvorrichtung Leistungssteuermittel zum Regeln bzw. Steuern und/oder begrenzen der maximal übertragbaren Leistungen umfassen. Alternativ oder zusätzlich kann die integrierte Steuerungsvorrichtung Spannungsregel- und/oder Steuermittel zum Regeln bzw. Steuern der Ausgangsspannung der Energiespeichereinheit umfassen. Vorteilhafterweise umfasst die Energiespeichervorrichtung zumindest einen Spannungssensor, der die Spannungen am Eingang und/oder über dem Speicherblock misst. In Verbindung mit den zuvor genannten Steuer- bzw. Regelmitteln kann das genannte Spannungssignal dazu verwendet werden, die Ausgangsspannung zu regeln, aber auch entsprechende Messwerte von Strom und Spannung über eine Kommunikationsverbindung an eine externe und/oder übergeordnete Steuervorrichtung zu übermitteln.

In einer bervorzugten Ausgestaltung der Erfindung verwendet die modulartige Energiespeichereinheit mehreren solcher Energiespeichereinheiten. Insbesondere können zumindest zwei, aber auch mehr als zwei Energiespeichereinheiten parallel geschaltet werden, wobei in Weiterbildung der Erfindung mehrere solcher Energiespeichereinheiten mit den nach außen führenden Leistungsanschlüssen direkt parallel schaltbar sind, d.h. Plus auf Plus und Minus auf Minus. Vorteilhafterweise ist die Steuervorrichtung des bzw. eines jeden Moduls dabei derart ausgebildet, dass sie eine solche Parallelschaltung unterstützt.

Insbesondere können die Energiespeichereinheiten mit einer Kommunikationsverbindung ausgestattet sein, die eine Kommunikation der Energiespeichereinheiten untereinander bzw. eine Kommunikation der integrierten Steuerungsvorrichtungen untereinander ermöglicht. Beispielsweise kann die genannte Kommunikationsvorrichtung ein Bussystem umfassen, über das die parallel geschalteten Energiespeichereinheiten miteinander kommunizieren können.

In einer bervorzugten Ausgestaltung der Erfindung ist die Steuerungsvorrichtung der Energiespeichereinheiten mit Steuermitteln bzw. Regelmitteln versehen, die bei mehreren parallel geschalteten Energiespeichern automatisch alle Speicherblöcke auf einen einheitlichen Energiebetrag einregeln bzw. entsprechend ansteuern.

Um eine einfache Anbindung an das Antriebssystem auch bei Verwendung mehrerer Energiespeichereinheiten zu ermöglichen, können die mehreren Energiespeichereinheiten untereinander mit einer weiteren elektrischen Leitung verbindbar sein, welche zum Anschluss des jeweiligen internen Speicherblocks führt.

Bei Zusammenschaltung mehrerer Energiespeichereinheiten können deren Steuerungsvorrichtungen auf verschiedene Art und Weise miteinander interagieren. Beispielsweise können die Steuerungsvorrichtungen gleichberechtigt zueinander agieren und jeweils direkt an eine übergeordnete Steuerung angebunden sein, beispielsweise über einen Steuerungsbus.

In alternativer Weiterbildung der Erfindung können die Steuerungsvorrichtungen der miteinander gekoppelten Energiespeichereinheiten auch hierarchisch miteinander agieren, insbesondere derart, dass eine Steuerungsvorrichtung einer Energiespeichereinheit eine übergeordnete Mastereinheit bildet und die Steuerungsvorrichtungen der übrigen Energiespeichereinheiten Slave-Einheiten bilden. Die Mastereinheit gibt Randbedingungen und/oder direkte Steuerungsbefehle für die anderen Slave-Einheiten vor, die dann in entsprechender Abhängigkeit ausgeführt werden. Insbesondere kann die als Mastereinheit fungierende Steuerungsvorrichtung mit einer übergeordneten Steuerung kommunizieren, während die als Slave-Einheit fungierenden Steuerungsvorrichtungen lediglich mit der genannten Mastereinheit kommunizieren. Das als Mastereinheit definierte Modul ermittelt und kommuniziert auch für die anderen als Slave-Einheiten definierten Module die Sollwertvorgaben für die Leistungsregelung und/oder andere Steuerungsparameter.

Die als Mastereinheit fungierende Steuerungsvorrichtung kann vorteilhafterweise ein Interface für alle gängigen Industriefeldbusse besitzen.

Die Erfindung wird nachfolgend anhand bevorzugter Ausführungsbeispiele und zugehöriger Zeichnungen näher erläutert. In den Zeichnungen zeigen:

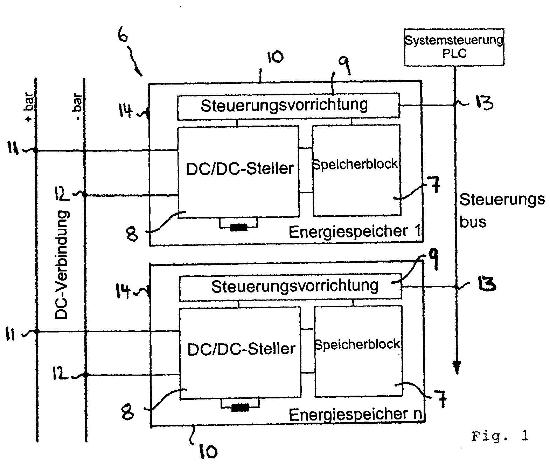

- Fig. 1:: eine schematische Darstellung einer Energiespeichervorrichtung nach einer ersten vorteilhaften Ausführung der Erfindung, wobei zwei Energiespeichereinheiten, die jeweils in ein gemeinsames Gehäuse integriert einen Speicherblock, eine Steuerungsvorrichtung und einen DC/DC-Steller umfassen, zueinander parallel geschaltet angeordnet sind und gleichberechtigt miteinander sowie mit einer übergeordneten Steuerung kommunizierende Steuerungsvorrichtungen umfassen,

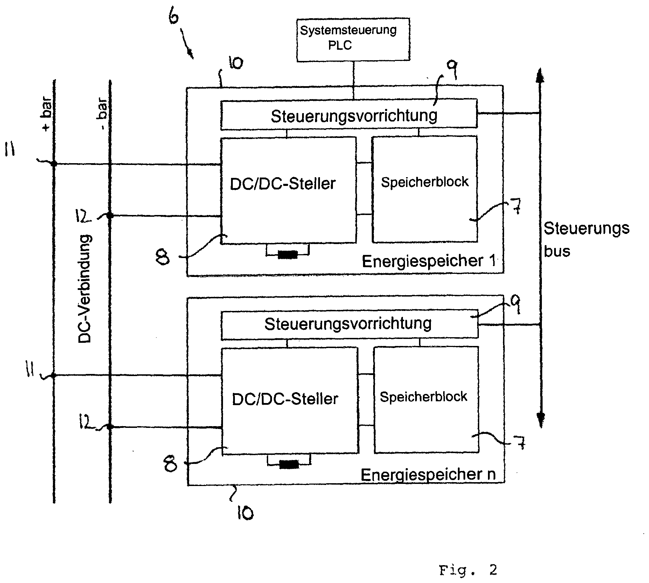

- Fig. 2:: eine schematische Darstellung einer Energiespeichervorrichtung nach einer zweiten vorteilhaften Ausführung der Erfindung, bei der ebenfalls zwei Energiespeichereinheiten zueinander parallel geschaltet angeordnet sind, im Gegensatz zur Ausführung nach Fig. 1 jedoch die Steuerungsvorrichtungen der Energiespeichereinheiten als Master- und SlaveEinheiten fungieren,

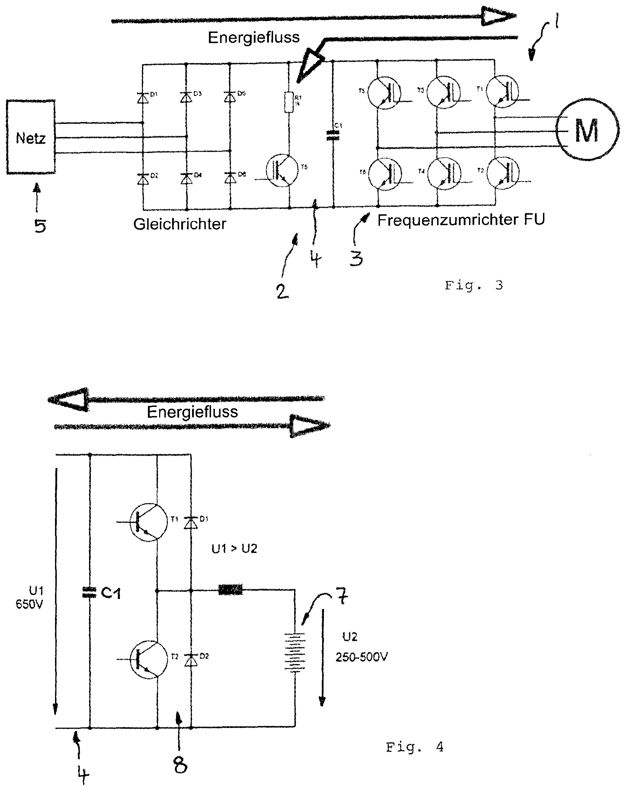

- Fig. 3:: eine schematische Darstellung eines Antriebssystems mit Netzspeisung und ein über einen Frequenzumrichter gesteuerten Elektromotor, wobei der Frequenzumrichter aus einem Gleichspannungs-Zwischenkreis versorgt wird, an welchen die Energiespeichervorrichtung aus den Figuren 1 und 2 anbindbar ist, und
- Fig. 4:: eine schematische Darstellung der Anbindung des Speicherblocks aus den Figuren 1 und 2 an den Gleichspannungs-Zwischenkreis aus Fig. 3 über einen DC/DC-Steller.

Fig. 3 zeigt ein Beispiel eines Antriebssystems 1, an das die in den Figuren 1 und 2 beispielhaft gezeigten Energiespeichervorrichtungen gemäß Ausführungsbeispielen der Erfindung angebunden werden können. Das Antriebssystem 1 kann einen Elektromotor M umfassen, der über eine Leistungselektronik 2 von einer Stromquelle bzw. Spannungsquelle 5 her versorgt werden kann, wobei die genannte Stromquelle 5 ein Netzanschluss, oder auch ein Generator sein kann, der beispielsweise von einem Dieselmotor angetrieben werden kann, wie dies häufig bei Baumaschinen der Fall ist. Der genannte Elektromotor M kann verschiedene Stellaggregate antreiben. Beispielsweise kann dies, wie eingangs erwähnt, ein Hubwerk und/oder ein Verfahrantrieb einer Hubvorrichtung beispielsweise in Form eines Krans, insbesondere eines Containerbrückenkrans sein, oder ein Stellantrieb oder ein Antriebsaggregat einer mobilen Baumaschine wie beispielsweise eines Fahrmischers.

Wie Fig. 3 zeigt, kann die Leistungselektronik 2 einen Frequenzumrichter 3 umfassen, der den Elektromotor M ansteuert und versorgt. Der genannte Frequenzumrichter 3 kann wiederum aus einem Gleichspannungskreis bzw. Gleichspannungs-Zwischenkreis 4 versorgt werden, der an die Stromquelle 5 angebunden ist und als Gleichrichter arbeiten kann. Insbesondere kann der genannte Gleichspannungs-Zwischenkreis 4 einen Zwischenkreiskondensator C1 umfassen, an dessen beiden Spannungsanschlüssen eine Energiespeichervorrichtung 6 angeschlossen werden kann, wie dies in den Figuren 1 und 2 gezeigt ist. Insbesondere kann die Anbindung des zumindest einen Speicherblocks 7 der Energiespeichervorrichtung 6 über einen DC/DC-Steller 8 erfolgen, der die Ausgangsspannung U2 des Speicherblocks 7 an die Spannung U1 des Gleichspannungs-Zwischenkreises 4 anbindet, vgl. Fig. 4.

Wenn der Elektromotor M des Antriebssystems 1 antreibt, wird Energie aus dem Gleichspannungs-Zwischenkreis 4 entnommen und dem Elektromotor M zugeführt, wobei die Nachlieferung der Energie aus der Stromquelle 5 über den Netzgleichrichter erfolgt, der in Fig. 3 den linken Schaltungsteil der Leistungselektronik 2 bildet. Wenn der Elektromotor M jedoch bremst, wird Energie vom Elektromotor M in das Gleichspannungssystem eingespeist. In herkömmlichen Systemen ohne Energiezwischenspeicherung wird diese rückgespeiste Energie üblicherweise, die in Fig. 3 mit dem Bezugszeichen R1 gekennzeichnet sind, zu Wärme vernichtet, wobei solche Hochlastwiderstände mittels elektronischen Schaltern T5 über das Gleichspannungssystem geschaltet werden können, um eine Zerstörung der Leistungselektronik durch die rückgespeiste Energie zu vermeiden.

Das beispielsweise an die Anschlüsse des Zwischenkreiskondensators C1 angeschlossene Energiespeichersystem dient nun dazu, die rückgespeiste Energie aus dem Gleichspannungs-Zwischenkreis 4 nicht zu vernichten, sondern sie aufzunehmen und zu einem späteren Zeitpunkt wieder zur Verfügung zu stellen. Der Energiespeicher selber kann hierbei aus verschiedenen elektrischen Komponenten gebildet sein, welche hierzu in Frage kommen. Dies können insbesondere Doppelschichtkondensatoren sein, oder auch Batteriezellen oder Akkumulatoren, wie sie in Notstromanlagen in Gebrauch sind. Beispielsweise kann aus mehreren solcher Zellen - beispielsweise mehreren Doppelschichtkondensatoren - durch Reihenund/oder Parallelschaltung ein Speicherblock 7 gebildet sein, der je nach Zellentyp und Ladungszustand eine veränderliche Summenspannung abgibt.

Die Schaltung wird nun vorteilhafterweise so ausgelegt, dass die maximale Spannung des Speicherblocks 7 niedriger ist als die minimale Spannung des Gleichspannungs-Zwischenkreises 4. Wie Fig. 4 zeigt, kann die Ausgangsspannung U2 des Speicherblocks 7 beispielsweise im Bereich von 250 bis 500 V liegen, während die Spannung U1 über den Anschlüssen des Gleichspannungs-Zwischenkreises 4 beispielsweise 650 V betragen kann.

Der DC/DC-Steller 8 verbindet nun die beiden Spannungssysteme miteinander, wobei die Schaltung des DC/DC-Stellers in der Lage ist, Energie vom hohen Spannungspegel in den niedrigen Spannungspegel zu transferieren, was dem Laden des Speicherblocks 7 entspricht, und auch in die andere Richtung zu transferieren, was dem Ausspeichern bzw. einem Energietransfer vom Speicherblock 7 in den Zwischenkreis 4 entspricht, vgl. Fig. 4.

Wie die Figuren 1 und 2 zeigen, zeichnet sich die Energiespeichervorrichtung 6 vorteilhafterweise durch eine Plug- and-Play-Konfiguration aus, so dass die Energiespeichervorrichtung 6 nach Art einer Blackbox einfach an den Zwischenkreis 4 anschließbar ist. Dabei sind jeweils ein Speicherblock 7, der wie erwähnt aus mehreren Speicherzellen beispielsweise in Form von Doppelschichtkondensatoren bestehen kann, zusammen mit einem DC/DC-Steller 8 und einer Steuerungsvorrichtung 9, die das Energiemanagement der Energiespeichervorrichtung bewerkstelligt, zu einer Energiespeichereinheit zusammengefasst und in ein gemeinsames Gehäuse 10 integriert, welches, wie erwähnt, aus verschiedenen Gehäuseteilen zusammengesetzt sein kann. An der Außenseite des Gehäuses 10 einer Energiespeichereinheit sind lediglich zwei Leistungsanschlüsse 11 und 12, die vorteilhafterweise als Stecker ausgeführt sein können, sowie Signalleitungsanschlüsse 13 vorgesehen, über die die Steuerungsvorrichtung 9 mit einer übergeordneten Steuerung PLC bzw. der Steuerungsvorrichtung 10 einer anderen Energiespeichereinheit kommunizieren kann, beispielsweise über ein Bussystem. Ferner können an dem Gehäuse 10 einer Energiespeichereinheit jeweils Kühlmittelanschlüsse 14 vorgesehen sein, um einen in das Gehäuse 10 integrierten Kühlkreis zur Kühlung des Speicherblocks 7 und/oder des DC/DC-Stellers 8 und/oder der Steuerungsvorrichtung 9 an einen externen Kühlkreis der Arbeitsmaschine anschließen zu können.

Wie Fig. 1 zeigt, können mehrere solcher Energiespeichereinheiten parallel geschaltet und in dieser Konfiguration an den Gleichspannungs-Zwischenkreis 4 angebunden werden, wobei die nach außen führenden Leistungsanschlüsse 11 und 12 direkt parallel geschaltet werden können, d.h. + auf + und - auf -. Die miteinander verbundenen Steuerungsvorrichtungen 9 der Energiespeichereinheiten kommunizieren miteinander über den Steuerungsbus und unterstützen die genannte Parallelschaltung insbesondere derart, dass automatisch alle Speicherblöcke der parallel geschalteten Einheiten auf einen einheitlichen Energiebetrag eingeregelt werden. Die Speicherblöcke 7 können dabei jeweils über eine Symmetrierschaltung verfügen, welche die Einzelspannungen der Speicherzellen zu einem möglichst einheitlichen Wert führt.

Wie Fig. 2 zeigt, können die Steuerungsvorrichtungen 9 der parallel geschalteten Energiespeichereinheiten auch hierarchisch miteinander kommunizieren, wobei eine Steuerungsvorrichtung 9 als Mastereinheit fungiert, die die anderen, als Slave-Einheiten fungierenden Steuerungsvorrichtungen 9 ansteuert, mit Steuerungsvorgaben und/oder direkten Steuerbefehlen versorgt, sowie mit der übergeordneten Systemsteuerung PLC kommuniziert.

Die Steuerungsvorrichtungen 9 der Speichereinheiten können dabei die eingangs bereits näher erläuterten Steuer- und/oder Regelmittel umfassen und mit entsprechenden Sensoren, Erfassungsschaltungen oder Sensorschaltungen versehen sein bzw. verbunden sein, so dass die Energiespeichervorrichtung 6 bzw. deren Energiespeichereinheiten, die in Parallelschaltung zusammengefasst sein können, die ebenfalls bereits eingangs erläuterten Funktionen ausführen können.

## Patentansprüche

1. Energiespeichervorrichtung zum Anschließen an einen Gleichspannungskreis (4) einer Leistungselektronik (2) eines Antriebssystems (1), mit zumindest einem elektrischen Speicherblock (7),
einem DC/DC-Steller (8) für die Verbindung des genannten Gleichspannungskreises (4) mit dem internen Spannungskreis des genannten Speicherblocks (7), sowie einer Steuerungsvorrichtung (9) zum Steuern des DC/DC-Stellers (8), wobei der DC/DC-Steller (8) bidirektional ausgebildet ist, und
die Steuerungsvorrichtung (9) Abgabe- und Einspeisesteuermittel zum Ansteuern des DC/DC-Steller sowohl für das Abgeben von Strom aus dem Speicherblock (7) an den Gleichspannungskreis (4) als auch für das Einspeisen von Strom aus dem Gleichspannungskreis (4) in den Speicherblock (7) aufweist,
**dadurch gekennzeichnet, dass**
der Speicherblock (7), der DC/DC-Steller (8) und die Steuerungsvorrichtung (9) zu einer Energiespeichereinheit mit einem gemeinsamen Gehäuse (10) zusammengefasst sind, in das der Speicherblock (7), der DC/DC-Steller (8) und die Steuerungsvorrichtung (9) aufgenommen sind und an dessen Außenseite zwei Leistungsanschlüsse (11, 12) zum Anschließen an den Gleichspannungskreis (4) der Leistungselektronik (2) vorgesehen sind, und
der zumindest eine Speicherblock (7) im Gehäuse (10) an einen internen Kühlkreis angebunden ist, der am Gehäuse (10) steckbare Kühlmittelanschlüsse (14) aufweist, um Kühlmittelleitungen eines externen Kühlkreises an das Gehäuse (10) der Energiespeichervorrichtung anzuschliessen, wobei
die Steuervorrichtung (9) dazu ausgelegt ist, in Abhängigkeit einer Temperatur einer elektrischen Komponente im Gehäuse (10) und/oder einer Umgebungstemperatur und/oder einer Gehäuseinnentemperatur den internen und/oder externen Kühlkreis anzusteuern, und wobei
die Steuerungsvorrichtung (9) Steuermittel zur Bestimmung einer Energiekennzahl und zum Bereitstellen und/oder Übermitteln dieser Energiekennzahl zu einer übergeordneten Steuerung umfasst, wobei die genannte Energiekennzahl die im Speicher verfügbare Energie darstellt, wobei
die Steuerungsvorrichtung (9) Steuer- und/oder Regelungsmittel für den DC/DC-Steller umfasst, die auf ein Steuerungssignal extern vorgebbare Leistungswerte für die Ladung und Entladung durch Sollwertvorgaben für die Regelung des DC/DC-Stellers umsetzt, wobei
die Steuerungsvorrichtung (9) Leistungssteuermittel zum Regeln und Begrenzen der maximal übertragbaren Leistungen umfasst und Spannungsregel- und/oder Steuermittel zum Regeln bzw. Steuern der Ausgangsspannung der Energiespeichereinheit umfasst, wobei
mehrere Energiespeichereinheiten, die jeweils einen Speicherblock (7), einen DC/DC-Steller (8) und eine Steuerungsvorrichtung (9) in einem Gehäuse untergebracht aufweisen, in Parallelschaltung miteinander, direkt mit ihren externen Leitungsanschlüssen (11, 12) jeweils Plus auf Plus und Minus auf Minus miteinander verbunden sind, wobei die Steuerungsvorrichtungen (9) der parallel geschalteten Energiespeichereinheiten zum Kommunizieren miteinander über ein Bussystem miteinander verbunden sind und die Parallelschaltung unterstützen derart, dass alle Speicherblöcke (7) auf einen einheitlichen Energiebetrag eingeregelt werden, wobei die Speicherblöcke (7) jeweils über eine Symmetrierschaltung zum Vereinheitlichen der Einzelspannungen ihrer einzelnen Speicherzellen auf einen einheitlichen Wert verfügen.

2. Energiespeichervorrichtung nach dem vorhergehenden Anspruch, wobei der Speicherblock (7) zumindest einen Kondensator, vorzugsweise Doppelschichtkondensator zur Energiespeicherung umfasst.

3. Energiespeichervorrichtung nach einem der vorhergehenden Ansprüche, wobei das Gehäuse (10) teilbar ausgebildet ist und mehrere Gehäuseteile umfasst, die zu dem gemeinsamen Gehäuse (10) zusammensetzbar sind, wobei vorzugsweise in verschiedenen Gehäuseteilen verschiedene elektrische Komponenten der Energiespeichereinheit untergebracht sind, die durch leitende Verbindungsmittel, insbesondere Steckkontakte, miteinander verbindbar sind, wobei an den Schnittstellen der Gehäuseteile Steckkontakte vorgesehen sind, die beim Zusammensetzen der Gehäuseteile automatisch in Kontakt geraten.

4. Energiespeichervorrichtung nach einem der vorhergehenden Ansprüche, wobei eine Warnsignaleinrichtung zum Abgeben eines Warnsignals bei noch mit Energie geladenem Speicherblock (7) vorgesehen und/oder ein Trennschalter zum Abtrennen des Speicherblocks (7) und/oder zum Energielosschalten der Leistungsanschlüsse (11, 12) am Gehäuse (10) vorgesehen ist.

5. Energiespeichervorrichtung nach einem der vorhergehenden Ansprüche, wobei eine Entladeschaltung zum Wandeln von im Speicherblock (7) gespeicherter Energie in Wärme vorgesehen ist, die vorzugsweise durch einen Steuerbefehl von außen her ansteuerbar ist.

6. Energiespeichervorrichtung nach einem der vorhergehenden Ansprüche, wobei die Steuerungsvorrichtung (9) derart ausgebildet ist, daß sie von außen her mit konfigurierbaren Parametern versorgbar ist und auf Basis dieser von außen her eingespeisten, konfigurierbaren Parameter eine kennliniengesteuerte Betriebsweise ausführt.

7. Energiespeichervorrichtung nach einem der vorhergehenden Ansprüche, wobei die Steuerungsvorrichtung (9) einer Energiespeichereinheit als Mastereinheit definiert ist und die Steuerungsvorrichtungen (9) der anderen Energiespeichereinheiten als Slave-Einheiten definiert sind, die von der genannten Mastereinheit ansteuerbar sind.

8. Antriebssystem mit zumindest einem Elektromotor (M), der über eine Leistungselektronik (2) speisbar ist, die über einen Gleichspannungskreis (4) mit einer Spannungsquelle (5) verbindbar ist, sowie ferner zumindest einer Energiespeichervorrichtung (6) zum Zwischenspeichern von aus dem Elektromotor (M) rückgespeister Energie, wobei die Energiespeichervorrichtung gemäß einem der vorhergehenden Ansprüche ausgebildet ist und an den Gleichspannungskreis (4) anschließbar ist.

9. Antriebssystem nach dem vorhergehenden Anspruch, wobei die maximale Spannung (U2) des zumindest einen Speicherblocks (7) der Energiespeichervorrichtung (6) niedriger gehalten ist als die minimale Spannung des Gleichspannungskreises (4), und/oder sowohl das Einspeisen von rückgespeister Energie des Elektromotors (M) in die Energiespeichervorrichtung (6) als auch das Abgeben von zwischengespeicherter Energie aus der Energiespeichervorrichtung (6) an den Gleichspannungskreis (4) über den DC/DC-Steller (8) der Energiespeichervorrichtung (6) erfolgt.

10. Hubvorrichtung, insbesondere Kran wie Containerbrückenkran, mit einem Antriebssystem nach einem der vorhergehenden Ansprüche.

11. Baumaschine, insbesondere Betonmischerfahrzeug, mit einem Antriebssystem nach einem der vorhergehenden Ansprüche.

## Claims

1. Energy storage apparatus for connecting to a DC voltage circuit (4) of power electronics (2) of a drive system (1), comprising
at least one electrical storage block (7),
a DC/DC converter (8) for the connection of the named DC voltage circuit (4) to the internal voltage circuit of the named storage block (7), and
a control apparatus (9) for controlling the DC/DC converter (8),
wherein the DC/DC converter (8) is bidirectional, and
the control apparatus (9) has output and feed control means for controlling the DC/DC converter both for the outputting of current from the storage block (7) to the DC voltage circuit (4) and for the feeding of current from the DC voltage circuit (4) into the storage block (7),
**characterized in that**
the storage block (7), the DC/DC converter (8) and the control apparatus (9) are combined to form an energy storage unit having a common housing (10) into which the storage bock (7), the DC/DC converter (8) and the control apparatus (9) are received and to whose outer side two power connections (11, 12) are provided for connection to the DC voltage circuit (4) of the power electronics (2), and
the at least one storage block (7) is linked in the housing (10) to an internal cooling circuit which comprises coolant connections (14) at the housing (10) for connection of coolant lines of an external cooling circuit to the housing (10) of the energy storage apparatus, wherein
the control apparatus (9) is configured to control, in dependence on a temperature of an electric component in the housing (10) and/or on an environmental temperature and/or on an inner housing temperature, the internal and/or external cooling circuit, and wherein
the control apparatus (9) comprises control means for determining an energy index and for providing and/or transferring this energy index to a higher-ranking control, with the named energy index representing the energy available in the store, wherein
the control apparatus (9) comprises control and/or regulation means for the DC/DC converter which, in response to a control signal from outside, converts definable power values for the charging and/or discharging by desired value defaults for the regulation of the DC/DC converter, wherein
the control apparatus (9) comprises power control means for regulating and limiting the maximum transferable powers and/or comprises voltage regulation and/or control means for regulating or controlling the output voltage of the energy storage unit, wherein
a plurality of energy storage units which each comprise a storage block (7), a DC/DC converter (8) and a control apparatus (9) accommodated in a housing can be connected to one another in a parallel connection, directly connected to one another by their external power connections (11, 12) in each case plus to plus and minus to minus, wherein
the control apparatusses (9) of the energy storage units connected in parallel are connected to one another via a bus system for communicating with one another and support the parallel connection such that all storage blocks (7) are set to a uniform energy amount, wherein the storage blocks (7) each have a symmetry circuit for setting the individual voltages in their individual storage cells to a uniform value.

2. Energy storage apparatus in accordance with the preceding claim, wherein the storage block (7) comprises at least one capacitor, preferably a dual-layer capacitor, for energy storage.

3. Energy storage apparatus in accordance with one of the preceding claims, wherein the housing (10) is configured as divisible and comprises a plurality of housing parts which can be put together to form the common housing (10), with different electric components of the energy storage unit, which can be connected to one another by conductive connection means, in particular plug-in contacts, wherein plug-in contacts, which automatically come into contact on the putting together of the housing parts, are provided at the interfaces of the housing parts.

4. Energy storage apparatus in accordance with one of the preceding claims, wherein a warning signal device is provided for outputting a warning signal with a storage block (7) still charged with energy and/or a disconnect switch is provided for disconnecting the storage block (7) and/or for deenergizing the power connections (11, 12) at the housing (10).

5. Energy storage apparatus in accordance with one of the preceding claims, wherein a discharge circuit is provided for converting energy stored in the storage block (7) into heat and is preferably controllable by a control command from outside.

6. Energy storage apparatus in accordance with one of the preceding claims, wherein the control apparatus (9) is configured such that it can be supplied with configurable parameters from the outside and carries out a characteristiccontrolled mode of operation on the basis of these configurable parameters fed in from the outside.

7. Energy storage apparatus in accordance with one of the preceding claims, wherein the control apparatus (9) of an energy storage unit is defined as a master unit and the control apparatus (9) of the other energy storage units are defined as slave units which are controllable by the named master unit.

8. Drive system having at least one electric motor (M) which can be fed via power electronics (2) which can be connected via a DC voltage circuit (4) to a voltage source (5) and furthermore having at least one energy storage apparatus (6) for a buffering of energy fed back from the electric motor (M), wherein the energy storage apparatus is configured in accordance with one of the preceding claims and is connectable to the DC voltage circuit (4).

9. Drive system in accordance with the preceding claim, wherein the maximum voltage (U2) of the at least one storage block (7) of the energy storage apparatus (6) is kept lower than the minimal voltage of the DC voltage circuit (4), and/or both the feeding of fed back energy of the electric motor (M) into the energy storage apparatus (6) and the outputting of buffered energy from the energy storage apparatus (6) to the DC voltage circuit (4) takes place via the DC/DC converter (8) of the energy storage apparatus (6).

10. Lifting apparatus, in particular a crane such as a container bridge crane, comprising a drive system in accordance with one of the preceding claims.

11. Construction machine, in particular a concrete mixer vehicle, comprising a drive system in accordance with one of the preceding claims.

## Revendications

1. Dispositif de stockage d'énergie destiné à être raccordé à un circuit à tension continue (4) d'une électronique de puissance (2) d'un système d'entraînement (1), avec
au moins un bloc de stockage (7) électrique,
un régulateur CC/CC (8) pour la liaison dudit circuit à tension continue (4) au circuit à tension interne dudit bloc de stockage (7), ainsi
qu'un dispositif de commande (9) pour commander le régulateur CC/CC (8), dans lequel
le régulateur CC/CC (8) est réalisé de manière bidirectionnelle, et
le dispositif de commande (9) présente des moyens de commande de distribution et d'injection pour piloter le régulateur CC/CC ainsi que pour la distribution de courant provenant du bloc de stockage (7) au circuit à tension continue (4) ainsi que pour l'injection de courant provenant du circuit à tension continue (4) dans le bloc de stockage (7),
**caractérisé en ce que**
le bloc de stockage (7), le régulateur CC/CC (8) et le dispositif de commande (9) sont regroupés en une unité de stockage d'énergie avec un boîtier (10) commun, dans lequel le bloc de stockage (7), le régulateur CC/CC (8) et le dispositif de commande (9) sont logés et sur le côté extérieur duquel deux raccords de puissance (11, 12) sont prévus pour être raccordés au circuit à tension continue (4) de l'électronique de puissance (2), et
l'au moins un bloc de stockage (7) est rattaché dans le boîtier (10) à un circuit de refroidissement interne, qui présente des raccords de réfrigérant (14) pouvant être enfichés sur le boîtier (10) pour raccorder des conduits de réfrigérant d'un circuit de refroidissement externe au boîtier (10) du dispositif de stockage d'énergie, dans lequel
le dispositif de commande (9) est conçu pour piloter le circuit de refroidissement interne et/ou externe en fonction d'une température d'un composant électrique dans le boîtier (10) et/ou d'une température ambiante et/ou d'une température interne de boîtier, et dans lequel
le dispositif de commande (9) comprend des moyens de commande pour définir un chiffre-clé d'énergie et pour fournir et/ou transmettre ledit chiffre-clé d'énergie pour une commande supérieure, dans lequel ledit chiffre-clé d'énergie constitue l'énergie disponible dans le système de stockage, dans lequel le dispositif de commande (9) comprend des moyens de commande et/ou de réglage pour le régulateur CC/CC, qui mettent en oeuvre des valeurs de puissance pouvant être spécifiées en externe sur un signal de commande pour la charge et la décharge par des spécifications de valeur théorique pour le réglage du régulateur CC/CC, dans lequel
le dispositif de commande (9) comprend des moyens de commande de puissance pour régler et limiter les puissances pouvant être transmises au maximum et des moyens de réglage de tension et/ou des moyens de commande pour régler ou commander la tension de sortie de l'unité de stockage d'énergie, dans lequel
plusieurs unités de stockage d'énergie, qui présentent, abrités dans un boîtier, respectivement un bloc de stockage (7), un régulateur CC/CC (8) et un dispositif de commande (9) selon un branchement en parallèle les uns avec les autres, sont reliés les uns aux autres respectivement plus sur plus et moins sur moins directement par leurs raccordements de puissance (11, 12) externes, dans lequel les dispositifs de commande (9) des unités de stockage d'énergie branchées en parallèles sont reliés les uns aux autres par l'intermédiaire d'un système de bus pour communiquer les uns avec les autres et soutiennent le branchement en parallèle de telle manière que tous les blocs de stockage (7) sont paramétrés sur une valeur d'énergie uniforme, dans lequel les blocs de stockage (7) disposent respectivement d'un circuit d'équilibrage pour homogénéiser les tensions individuelles de leurs diverses cellules de stockage sur une valeur uniforme.

2. Dispositif de stockage d'énergie selon la revendication précédente, dans lequel le bloc de stockage (7) comprend au moins un condensateur, de préférence un condensateur à double couche pour le stockage d'énergie.

3. Dispositif de stockage d'énergie selon l'une quelconque des revendications précédentes, dans lequel le boîtier (10) est réalisé de manière à pouvoir être divisé et comprend plusieurs parties de boîtier, qui peuvent être assemblées en le boîtier (10) commun, dans lequel sont abrités dans différentes parties de boîtier de préférence différents composants électriques de l'unité de stockage d'énergie, qui peuvent être reliés les uns aux autres par des moyens de liaison conducteurs, en particulier par des contacts à fiches, dans lequel sont prévus sur les interfaces des parties de boîtier des contacts à fiches, qui passent automatiquement en contact lors de l'assemblage des parties de boîtier.

4. Dispositif de stockage d'énergie selon l'une quelconque des revendications précédentes, dans lequel un dispositif de signal d'avertissement est prévu pour distribuer un signal d'avertissement lorsque le bloc de stockage (7) est encore chargé en énergie et/ou un disjoncteur est prévu pour séparer le bloc de stockage (7) et/ou pour brancher sans énergie les raccordements de puissance (11, 12) sur le boîtier (10).

5. Dispositif de stockage d'énergie selon l'une quelconque des revendications précédentes, dans lequel un circuit de décharge est prévu pour convertir de l'énergie stockée dans le bloc de stockage (7) en chaleur, qui peut être pilotée depuis l'extérieur de préférence par une instruction de commande.

6. Dispositif de stockage d'énergie selon l'une quelconque des revendications précédentes, dans lequel le dispositif de commande (9) est réalisé de telle manière qu'il peut être alimenté depuis l'extérieur avec des paramètres configurables et exécute un mode de fonctionnement commandé sur la base d'une courbe caractéristique sur la base desdits paramètres configurables injectés depuis l'extérieur.

7. Dispositif de stockage d'énergie selon l'une quelconque des revendications précédentes,
dans lequel le dispositif de commande (9) d'une unité de stockage d'énergie est défini en tant qu'unité maître, et les dispositifs de commande (9) des autres unités de stockage d'énergie sont définis en tant qu'unités esclaves, qui peuvent être pilotées par ladite unité maître.

8. Système d'entraînement avec au moins un moteur électrique (M), qui peut être alimenté par l'intermédiaire d'une électronique de puissance (2), qui peut être reliée à une source de tension (5) par l'intermédiaire d'un circuit à tension continue (4), ainsi qu'en outre avec au moins un dispositif de stockage d'énergie (6) pour stocker temporairement de l'énergie renvoyée depuis le moteur électrique (M), dans lequel le dispositif de stockage d'énergie est réalisé selon l'une quelconque des revendications précédentes et peut être raccordé au circuit à tension continue (4).

9. Système d'entraînement selon la revendication précédente, dans lequel la tension maximale (U2) de l'au moins un bloc de stockage (7) du dispositif de stockage d'énergie (6) est maintenue à un niveau plus bas que la tension minimale du circuit à tension continue (4), et à la fois l'injection d'énergie renvoyée du moteur électrique (M) dans le dispositif de stockage d'énergie (6) et la distribution d'énergie stockée temporairement provenant du dispositif de stockage d'énergie (6) au circuit à tension continue (4) est effectuée par l'intermédiaire du régulateur CC/CC (8) du dispositif de stockage d'énergie (6).

10. Dispositif de levage, en particulier grue ainsi que pont roulant pour conteneurs, avec un système d'entraînement selon l'une quelconque des revendications précédentes.

11. Engin de construction, en particulier véhicule à bétonnière, avec un système d'entraînement selon l'une quelconque des revendications précédentes.
